(19) **Europäisches Patentamt**
**European Patent Office**
**Office européen des brevets**

(11) **EP 3 346 197 B1**

(12) **EUROPEAN PATENT SPECIFICATION**

(45) Date of publication and mention
of the grant of the patent:
**28.08.2019 Bulletin 2019/35**

(51) Int Cl.:
***F24D 3/00*** *(2006.01)*   ***F24D 19/10*** *(2006.01)*

(21) Application number: **16903366.9**

(22) Date of filing: **08.11.2016**

(86) International application number:
**PCT/JP2016/083077**

(87) International publication number:
**WO 2018/087810 (17.05.2018 Gazette 2018/20)**

(54) **HEATING CONTROL SYSTEM AND HEAT PUMP HOT-WATER HEATING SYSTEM**

HEIZUNGSSTEUERUNGSSYSTEM UND WARMWASSERHEIZSYSTEM MIT WÄRMEPUMPE

SYSTÈME DE COMMANDE DE CHAUFFAGE ET SYSTÈME DE CHAUFFAGE D'EAU CHAUDE DE POMPE À CHALEUR

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**11.07.2018 Bulletin 2018/28**

(73) Proprietor: **MITSUBISHI ELECTRIC CORPORATION**
**Chiyoda-ku**
**Tokyo 100-8310 (JP)**

(72) Inventors:
• **MATSUZAWA, Koji**
**Tokyo 100-8310 (JP)**
• **HATTORI, Taro**
**Tokyo 100-8310 (JP)**

(74) Representative: **Pfenning, Meinig & Partner mbB**
**Patent- und Rechtsanwälte**
**Theresienhöhe 11a**
**80339 München (DE)**

(56) References cited:
**EP-A1- 2 950 017      EP-A2- 2 770 398**
**WO-A1-2009/157630      WO-A1-2016/010006**

## Description

Technical Field

The present invention relates to a heating control system, which is configured to control a water circulating pump configured to change a flow rate of a heat medium in a hot water circuit that is used in relatively small buildings, such as houses and apartment buildings, and is configured to perform heating by circulating the heat medium between a heat source device using refrigerant and a load-side device, and to a heat-pump hot-water supply heating system.

Background Art

In Europe, heat radiation devices configured to perform radiant heating by circulating hot water, such as floor heating panels or radiators (panel heaters), are generally used as load-side devices. Further, in recent years, in view of energy saving or due to environmental regulations or other factors, some devices employ, as a water circulating pump that is used for heating, a variable speed pump instead of a constant speed pump. A purpose of flow rate control is to reduce power, that is, power consumption of a water circulating pump by variably controlling a flow rate in the water circulating pump. Further, another purpose of the flow rate control is to improve the operational efficiency of a heat source device by maintaining a constant temperature difference between the temperature of a heat medium that flows into a load-side device and the temperature of the heat medium that flows out of the load-side device. However, the load-side device has a heat radiation limit that the temperature of the heat medium that returns to the heat source device cannot be lowered to 20 degrees C or lower in a room with a room temperature of 20 degrees C, for example. Thus, when the flow rate is excessively controlled in order to maintain the constant difference in temperature of the heat medium in the load-side device without taking into account the performance of a connector, environmental conditions, or other matters, the flow rate may be lowered too much and circulating water may freeze in the defrosting operation, for example. As a measure against this, a heat medium flow rate control device that takes a lower limit flow rate into account in flow rate control is disclosed (for example, see Patent Literature 1).

In Patent Literature 1, the heat medium flow rate control device determines patterns of the controlling state of a heat medium flow rate based on the operation state of a heat source device. When the pattern of the controlling state is determined as a pattern C, for example, the flow rate control is performed within a range between an upper limit flow rate and a lower limit flow rate that is defined by the heat source device, at a flow rate that is calculated based on a temperature difference between an outflow temperature of the heat medium and an inflow temperature of the heat medium that flow out/into the heat source device, and on temperature target values of those temperatures.

WO 2009/157630 A1 relates to a method of controlling the temperature of hot water for using hot water at a low-flow rate in a hot water supply system. The hot water supply system includes: a flow sensor; a heat exchanger; a water tank, a temperature sensor; a controller having an input unit; and a pump that is disposed in a pipe line connecting a first diverging point formed at a pipe line for an outlet and a second diverging point formed at a pipe line for an inlet. The method includes: measuring the flow rate of water flowing into the hot water supply system, using the flow sensor; preheating-circulating the water in the hot water supply system through an internal circulation path connecting the first diverging point, the second diverging point, and the heat exchanger, using the pump, after the controller stops the combustion of the heating device when the measured flow rate is an operation flow rate of the water supply system or less; measuring the temperature of the water circulating, using the temperature sensor; and setting predetermined temperature above user set-temperature as preheating circulation-off temperature and predetermined temperature below the set temperature as preheating circulation-on temperature, and then starting operation of the heating device when the temperature measured by the temperature sensor is preheating circulation-on temperature or less and stopping the operation of the heating device when the measured temperature is the preheating circulation-off temperature or more, using the controller.

Citation List

Patent Literature

Patent Literature 1: WO 2016/010006 A1

Summary of Invention

Technical Problem

In the heat medium flow rate control device of Patent Literature 1, the lower limit flow rate is a lower limit rate that does not interfere with the operation of the heat source device. This means that an indoor unit configured to control the water circulating pump to perform the flow rate control needs to grasp the lower limit flow rate in advance in performing the flow rate control. However, a heat source device that is connectable to a load-side device includes heat source devices of a plurality of types, and the number of types of heat source devices is to increase in the future. It is thus difficult to grasp a "lower limit flow rate" of a heat source device in an indoor unit in advance.

The present invention has been made in order to solve the problem described above, and has an object to provide a heating control system that does not need to grasp lower limit flow rate information on a heat source device in advance in order to variably control a flow rate of a heat medium, and a heat-pump hot-water supply heating system.

Solution to Problem

According to one embodiment of the present invention, there is provided a heating control system, which is configured to control a water circulating pump configured to change a flow rate of a heat medium that circulates through a heat source device and a heat radiation device via a pipe, the heating control system including: an outflow temperature sensor, which is configured to detect an outflow temperature of the heat medium that flows out of the heat source device; an inflow temperature sensor, which is configured to detect an inflow temperature of the heat medium that flows into the heat source device; a flow sensor, which is configured to measure the flow rate of the heat medium flowing through the pipe; and a controller, which is configured to control the water circulating pump, to thereby control the flow rate of the heat medium, the controller including: a data collection unit, which is configured to collect heat medium information that includes the flow rate of the heat medium measured by the flow sensor, the outflow temperature detected by the outflow temperature sensor, and the inflow temperature detected by the inflow temperature sensor; a lower limit flow rate calculation unit, which is configured to calculate a lower limit flow rate of the heat medium that flows when a minimum amount of heat is supplied by the heat source device, based on the heat medium information collected by the data collection unit; and a flow rate control command unit, which is configured to control the water circulating pump based on the lower limit flow rate calculated by the lower limit flow rate calculation unit.

Advantageous Effects of Invention

According to the heating control system of the one embodiment of the present invention, the lower limit flow rate of the heat medium for the connected heat source device is calculated based on the heat medium information collected from the flow sensor, the outflow temperature sensor, and the inflow temperature sensor. Consequently, the heating control system does not need to store in advance lower limit flow rate information on a plurality of heat source devices, which may be connected to the heat radiation device, and can perform the flow rate control that is suitable for the connected heat source device, based on the calculated lower limit flow rate.

Brief Description of Drawings

Fig. 1 is a configuration diagram for illustrating a heat-pump hot-water supply heating system according to Embodiment 1 of the present invention.
Fig. 2 is a block diagram for illustrating the functional configuration of a controller of Embodiment 1 of the present invention.
Fig. 3 is a flow chart for illustrating an example of control that is performed by the controller of Embodiment 1 of the present invention. Description of Embodiments

Embodiment 1

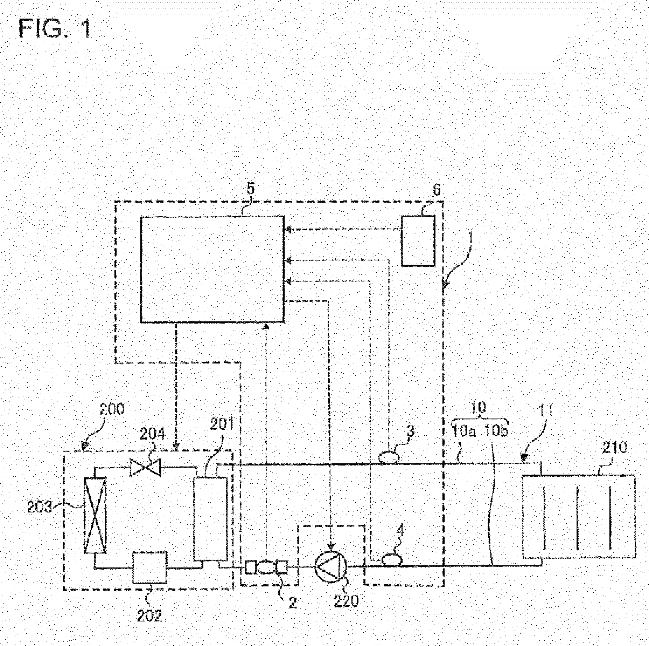

Fig. 1 is a configuration diagram for illustrating a heat-pump hot-water supply heating system according to Embodiment 1 of the present invention. The heat-pump hot-water supply heating system includes a hot water circuit and a heating control system. With reference to Fig. 1, the heat-pump hot-water supply heating system is described by taking a case in which the heat-pump hot-water supply heating system performs the heating operation as an example.

A hot water circuit 11 includes a heat source device 200, a heat radiation device 210, and a pipe 10 connecting the heat source device 200 and the heat radiation device to each other. Further, the hot water circuit 11 includes a water circulating pump 220 configured to circulate a heat medium through the hot water circuit 11. The water circulating pump 220 is installed on the pipe 10 or other components, and is configured to variably control a flow rate of the heat medium through rotation speed control, for example. Further, the heat medium is liquid containing water as its main component, for example.

The heat source device 200 is configured to heat the heat medium, and represents a heat pump outdoor unit of a heat pump cycle, for example. The configuration of the heat source device 200 is described by taking a case in which the heat source device 200 includes a refrigerant circuit as an example. The refrigerant circuit includes, for example, an air-refrigerant heat exchanger 203, a compressor 202, a refrigerant-water heat exchanger 201, and a refrigerant flow rate control valve 204 that are connected to one another by a refrigerant pipe. The air-refrigerant heat exchanger 203 is configured to collect heat in the air to heat refrigerant. The compressor 202 is configured to circulate the refrigerant through the refrigerant circuit, and the heating capacity of the heat source device 200 changes depending on the rotation speed of the compressor 202, for example. The refrigerant-water heat exchanger 201 includes a flow passage through which the refrigerant flows and a flow passage through which the water heat medium flows, and is configured to perform heat exchange between the refrigerant and the heat medium. Although not illustrated, the refrigerant circuit includes a four-way valve and other components, and the refrigerant-water heat exchanger 201 is configured to heat the heat medium in the heating operation, and cool the heat medium in the cooling operation. Hot water obtained through the heat exchange in the refrigerant-water heat exchanger 201 is sent to the heat radiation device 210.

The heat radiation device 210, which is a load-side device, includes a floor heating panel or a radiator, for example. The heat radiation device 210 is installed under a floor, in a room, on the wall in the room, or other places, and is configured to perform heating by radiating heat that is supplied from the heat source device 200 and conveyed by the heat medium.

The pipe 10 includes a supply pipe 10a and a return pipe 10b. The supply pipe 10a is used for supplying the heat medium heated by the heat source device 200 to the heat radiation device 210, and has one end connected to an outflow port of the refrigerant-water heat exchanger 201 and the other end connected to an inflow port of the heat radiation device 210. The return pipe 10b is used for returning the heat medium that has flowed out of the heat radiation device 210 to the heat source device 200, and has one end connected to an outflow port of the heat radiation device 210 and the other end connected to an inflow port of the refrigerant-water heat exchanger 201.

A heating control system 1 is configured to control the heating operation. The heating control system 1 includes a controller 5, a flow sensor 2, an outflow temperature sensor 3, an inflow temperature sensor 4, and other components. The heating control system 1 is configured to control the water circulating pump 220, and transmit operation commands to the heat source device 200.

The flow sensor 2 is installed on the hot water circuit 11, and is configured to measure the flow rate of the heat medium flowing through the pipe 10. The outflow temperature sensor 3 is installed on the supply pipe 10a, and is configured to detect an outflow temperature of the heat medium that flows from the heat source device 200 to the heat radiation device 210. The inflow temperature sensor 4 is installed on the return pipe 10b, and is configured to detect an inflow temperature of the heat medium that flows from the heat radiation device 210 to the heat source device 200. The outflow temperature sensor 3 and the inflow temperature sensor 4 each include a thermistor, for example.

The controller 5 is configured to control the water circulating pump 220, and includes a microcomputer, for example. To the controller 5, the flow sensor 2, the outflow temperature sensor 3, and the inflow temperature sensor 4, and other components are connected. Further, the controller 5 is connected to the water circulating pump 220, and is configured to control the operation of the water circulating pump 220 based on a temperature difference between the outflow temperature and the inflow temperature, to thereby control the flow rate of the heat medium.

Further, the heating control system 1 may include a remote controller 6 that allows a user to set various settings. The remote controller 6 includes a display unit, a plurality of switches, and other components, and is connected to the controller 5 by wired or wireless communication so that the controllers can mutually communicate with each other. Setting data input by the user operating the remote controller 6 is transmitted to the controller 5. Further, the remote controller 6 is configured to obtain necessary information from the controller 5 and display the information on the display unit when the user sets the settings. The setting data is, for example, a target outflow temperature, and an upper limit temperature and a lower limit temperature of the outflow temperature in the heating operation.

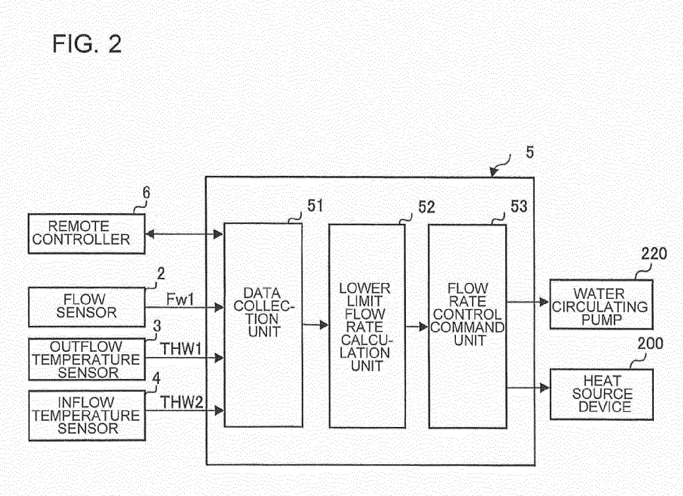

Fig. 2 is a block diagram for illustrating the functional configuration of the controller of Embodiment 1 of the present invention. The function of the controller 5 and how a signal is transmitted in the controller 5 are described with reference to Fig. 2. The controller 5 includes a data collection unit 51, a lower limit flow rate calculation unit 52, and a flow rate control command unit 53.

The data collection unit 51 receives heat medium information that includes, for example, a flow rate Fw1 of the heat medium, an outflow temperature THW1, and an inflow temperature THW2 from the flow sensor 2, the outflow temperature sensor 3, and the inflow temperature sensor 4. Further, the data collection unit 51 receives and stores the setting data input from the remote controller 6. The data collection unit 51 outputs, to the lower limit flow rate calculation unit 52, the heat medium information collected from the above-mentioned plurality of sensors and the setting data set through the remote controller 6.

The lower limit flow rate calculation unit 52 makes start determination and end determination of the flow rate control based on the heat medium information, the setting data, and other kinds of information input from the data collection unit 51. Further, the lower limit flow rate calculation unit 52 is configured to estimate the lower limit flow rate of the heat medium in the connected heat source device 200 based on the information input from the data collection unit 51. The "lower limit flow rate" as used herein represents a flow rate of the heat medium that flows when the minimum amount of heat is supplied by the refrigerant-water heat exchanger 201. The lower limit flow rate calculation unit 52 outputs the calculated lower limit flow rate to the flow rate control command unit 53.

The flow rate control command unit 53 controls the water circulating pump 220 based on the lower limit flow rate input from the lower limit flow rate calculation unit 52. The flow rate control command unit 53 transmits a control signal to the water circulating pump 220 to control the operation of the water circulating pump 220, to thereby control the flow rate of the heat medium that flows through the pipe 10. The flow rate control command unit 53 determines the flow rate at which the heat medium circulates, depending on a temperature difference between the outflow temperature THW1 and the inflow temperature THW2 that are collected by the data collection unit 51. In the flow rate control, the flow rate control command unit 53 uses the flow rate lower limit value calculated by the lower limit flow rate calculation unit 52 as a lower limit value of the flow rate, which is changed by the water circulating pump 220.

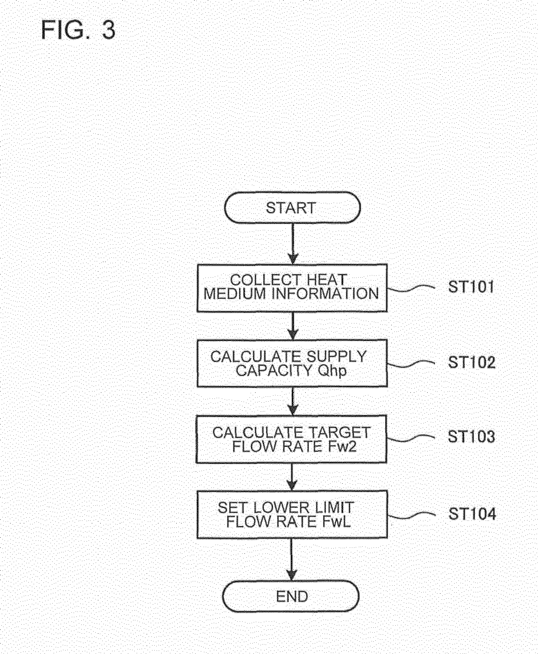

Fig. 3 is a flow chart for illustrating an example of control that is performed by the controller of Embodiment 1 of the present invention. A target flow rate of the heat medium that circulates generally has a correlation with the supply capacity of the heat source device 200. Thus, the controller 5 estimates a supply capacity Qhp of the heat source device 200 in a low-load state based on the collected heat medium information, and calculates a target flow rate Fw2 based on the estimated supply capacity Qhp and a set target temperature difference $\Delta$T of the heat medium. Then, the controller 5 sets the target flow rate Fw2, which has been calculated in the low-load state, as a lower limit flow rate FwL of the flow rate control.

A specific procedure followed by the controller 5 to set the lower limit flow rate FwL for the heat source device 200 is described with reference to the flow chart of Fig. 3. Control illustrated in Fig. 3 starts under a state in which the heat source device 200 operates at minimum power. The state in which the heat source device 200 operates at minimum power represents a state in which the minimum amount of heat is supplied from the heat source device 200, for example, a state in which the compressor 202 runs at a frequency of a set lower limit value. In the control of Fig. 3, the processing of Step ST101 to the processing of Step ST104 may be performed after the controller 5 transmits an operation command that causes the heat source device 200 to operate at minimum power, based on a command input by the user through the remote controller 6, for example.

First, in Step ST101, the data collection unit 51 collects the heat medium information from the flow sensor 2, the outflow temperature sensor 3, and the inflow temperature sensor 4. The data collection unit 51 outputs the collected heat medium information and the setting data set to the controller 5 to the lower limit flow rate calculation unit 52.

In Step ST102, the lower limit flow rate calculation unit 52 calculates the supply capacity Qhp of the heat source device 200 by (Expression 1) based on the heat medium information.

$$Qhp = Cp \times Fw1 \times (THW1 - THW2) \times \alpha \qquad \cdots \text{(Expression 1)}$$

Qhp: Supply capacity of heat source device (kW)
Cp: Constant
Fw1: Current flow rate (L/min)
THW1: Current outflow temperature (degrees C)
THW2: Current inflow temperature (degrees C)
$\alpha$: Safety factor

The safety factor $\alpha$ is a value (1 or larger) that takes into account the accuracy of the flow sensor 2, the outflow temperature sensor 3, and the inflow temperature sensor 4. The accuracy of the sensors depends on variations in parts or resolution, for example.

Next, the lower limit flow rate calculation unit 52 calculates the target flow rate Fw2 by (Expression 2) based on the calculated supply capacity Qhp (Step ST103).

$$Fw2 = (1/Cp) \times Qhp \times (1/\Delta T) \qquad \cdots \text{(Expression 2)}$$

Fw2: Target flow rate (L/min)
Qhp: Supply capacity of heat source device calculated with (Expression 1) (kW)
$\Delta$T: Target temperature difference between outflow temperature and inflow temperature (degrees C)

The target temperature difference $\Delta$T represents a temperature difference that falls within a range in which water does not freeze in the defrosting operation, and achieves a high-efficiency operation. The target temperature difference $\Delta T$ may be set to the controller 5 in advance. Further, for example, the target temperature difference $\Delta T$ may be determined by the lower limit flow rate calculation unit 52 based on the setting data set through the remote controller 6, the heat medium information, and other types of information.

Then, the lower limit flow rate calculation unit 52 informs the flow rate control command unit 53 of the calculated target flow rate Fw2 as the lower limit flow rate.

The flow rate control command unit 53 sets the lower limit flow rate, which has been informed by the lower limit flow rate calculation unit 52, as the lower limit flow rate FwL of the heat medium in the heat source device 200 (Step ST104). When the flow rate control command unit 53 sets the lower limit flow rate FwL of the flow rate control, the control illustrated in Fig. 3 ends.

The controller 5 controls the water circulating pump 220 to operate depending on the temperature difference between the outflow temperature THW1 and the inflow temperature THW2, to thereby control the flow rate of the heat medium that circulates through the hot water circuit 11. After the lower limit flow rate FwL is set for the connected heat source device 200 as illustrated in Fig. 3, the flow rate control command unit 53 performs the flow rate control with the use of the lower limit flow rate FwL. In the heating operation, for example, the control is performed so that the flow rate of the heat medium does not fall below the lower limit flow rate FwL.

As described above, in Embodiment 1, the heating control system 1 includes the outflow temperature sensor 3, the inflow temperature sensor 4, the flow sensor 2, and the controller 5. The controller 5 includes: the data collection unit 51, which is configured to collect the heat medium information that includes the flow rate Fw1 of the heat medium measured by the flow sensor 2, the outflow temperature THW1 detected by the outflow temperature sensor 3, and the inflow temperature THW2 detected by the inflow temperature sensor 4; the lower limit flow rate calculation unit 52, which is configured to calculate the lower limit flow rate of the heat medium that flows when the minimum amount of heat is supplied by the heat source device 200, based on the heat medium information collected by the data collection unit 51; and the flow rate control command unit 53, which is configured to control the water circulating pump 220 based on the lower limit flow rate calculated by the lower limit flow rate calculation unit 52.

With this configuration, the heating control system 1, which is configured to perform the flow rate control of the heat medium, calculates the lower limit flow rate for the heat source device 200 connected to the hot water circuit 11, and hence it is possible to eliminate work of, for example, obtaining in advance device information on heat source devices of a plurality of types, which may be connected, and storing the device information in a controller. Further, the lower limit flow rate can be calculated as long as the heat source device 200 is connected to the hot water circuit 11, which enables support for new types to come.

Further, the lower limit flow rate calculation unit 52 is configured to calculate the supply capacity Qhp of the heat source device 200 based on the heat medium information under a state in which the minimum amount of heat is supplied by the heat source device 200, and calculate the target flow rate Fw2 based on the calculated supply capacity Qhp and the preset target temperature difference $\Delta T$ between the outflow temperature and the inflow temperature. The flow rate control command unit 53 is configured to set the calculated target flow rate Fw2 as the lower limit flow rate FwL.

With this configuration, the lower limit flow rate calculation unit 52 utilizes the correlation between the target flow rate and the supply capacity of the heat source device 200, thereby being capable of estimating the lower limit flow rate for the connected heat source device based on the heat medium information input from the data collection unit 51.

Further, the heat-pump hot-water supply heating system includes: the heat source device 200, which forms the heat pump cycle, and is configured to heat the heat medium; the heat radiation device 210, which is connected to the heat source device 200 by the pipe 10 through which the heat medium flows; the water circulating pump 220, which is configured to circulate the heat medium through the heat source device 200 and the heat radiation device 210; and the above-mentioned heating control system 1.

With this configuration, the heat-pump hot-water supply heating system can set the lower limit flow rate corresponding to the connected heat source device 200 without obtaining in advance device information on heat source devices of a plurality of types, which may be connected. Further, the flow rate control of the heat medium that flows through the hot water circuit 11 is performed with the use of the lower limit flow rate, and hence it is possible to avoid phenomena that occur due to changes in flow rate of the heat medium, such as freezing of water in the defrosting operation and high pressure abnormality of the refrigerant circuit.

Embodiments of the present invention are not limited to the embodiment described above, and various modifications may be made thereto. For example, water is used as the heat medium in the description of Embodiment 1, but the heat medium is not particularly limited to water, and may be any kind of liquid (for example, ethylene glycol, propylene glycol, or mixture of those) that meets the regulations of a country in which the heating control system or the heat-pump hot-water supply heating system is installed.

Further, the lower limit flow rate calculation unit 52 may be configured to set, as the lower limit flow rate FwL, the target flow rate Fw2 in a memory unit provided to the controller 5 instead of informing the flow rate control command unit 53 of the target flow rate Fw2 as the lower limit flow rate. In this case, the flow rate control command unit 53 performs the flow rate control by referring to the lower limit flow rate FwL set in the memory unit. Further, when an initial value or a set value is stored in the memory unit as the lower limit flow rate, the value set in advance may be replaced with a newly calculated lower limit flow rate in Step ST104 of Fig. 3.

Reference Signs List

1 heating control system 2 flow sensor 3 outflow temperature sensor 4 inflow temperature sensor 5 controller 6 remote controller
10 pipe 10a supply pipe 10b return pipe 11 hot water circuit 51 data collection unit 52 lower limit flow rate calculation unit 53 flow rate control command unit 200 heat source device 201 refrigerant-water heat exchanger
202 compressor 203 air-refrigerant heat exchanger 204 refrigerant flow rate control valve 210 heat radiation device 220 water circulating pump
Fw1 flow rate Fw2 target flow rate FwL lower limit flow rate
Qhp supply capacity THW1 outflow temperature THW2 inflow temperature $\Delta$T target temperature difference

**Claims**

1. A heating control system (1) configured to control a water circulating pump (220) configured to change a flow rate of a heat medium that circulates through a heat source device (200) and a heat radiation device (210) via a pipe (10), the heating control system (1) comprising:

   an outflow temperature sensor (3) configured to detect an outflow temperature of the heat medium that flows out of the heat source device (200);
   an inflow temperature sensor (4) configured to detect an inflow temperature of the heat medium that flows into the heat source device (200); and
   a controller (5) configured to control the water circulating pump (220), to thereby control the flow rate of the heat medium,
   **characterized in that**
   the heating control system further comprises a flow sensor (2) configured to measure the flow rate of the heat medium flowing through the pipe (10), and
   the controller (5) includes

      a data collection unit (51) configured to collect heat medium information that comprises the flow rate (Fw1) of the heat medium measured by the flow sensor (2), the outflow temperature (THW1) detected by the outflow temperature sensor (3), and the inflow temperature (THW2) detected by the inflow temperature sensor (4),
      a lower limit flow rate calculation unit (52) configured to calculate a lower limit flow rate of the heat medium that flows when a minimum amount of heat is supplied by the heat source device (200), based on the heat medium information collected by the data collection unit (51), and
      a flow rate control command unit (53) configured to control the water circulating pump (220) based on the lower limit flow rate calculated by the lower limit flow rate calculation unit (52).

2. The heating control system (1) of claim 1,
   wherein the lower limit flow rate calculation unit (52) is configured to calculate a supply capacity (Qhp) of the heat source device (200) based on the heat medium information under a state in which the minimum amount of heat is supplied by the heat source device (200), and calculate a target flow rate (Fw2) based on the calculated supply capacity (Qhp) and a set target temperature difference ($\Delta$T) between the outflow temperature and the inflow temperature, and
   wherein the flow rate control command unit (53) is configured to set the calculated target flow rate (Fw2) as the lower limit flow rate (FwL).

3. A heat-pump hot-water supply heating system, comprising:

   a heat source device (200) including a heat pump cycle, and configured to heat a heat medium;
   a heat radiation device (210) connected to the heat source device (200) by a pipe (10) through which the heat medium flows;
a water circulating pump (220) configured to circulate the heat medium through the heat source device (200) and the heat radiation device (210); and
the heating control system (1) of claim 1 or 2.

**Patentansprüche**

1. Erwärmungssteuerungssystem (1), das eingerichtet ist, eine Wasserzirkulationspumpe (220), die eingerichtet ist, eine Strömungsrate eines Wärmemediums, das durch eine Wärmequelleneinrichtung (200) und eine Wärmeabstrahlungseinrichtung (210) über eine Leitung (10) zirkuliert, zu ändern, zu steuern, wobei das Erwärmungssteuerungssystem (1) umfasst:

   einen Ausströmtemperatursensor (3), der eingerichtet ist, eine Ausströmtemperatur des Wärmemediums, das aus der Wärmequelleneinrichtung (200) ausströmt, zu erfassen;
   einen Einströmtemperatursensor (4), der eingerichtet ist, eine Einströmtemperatur des Wärmemediums, das in die Wärmequelleneinrichtung (200) einströmt, zu erfassen; und
   eine Steuereinheit (5), die eingerichtet ist, die Wasserzirkulationspumpe (220) zu steuern, um dabei die Strömungsrate des Wärmemediums zu steuern,
   **dadurch gekennzeichnet, dass**
   das Erwärmungssteuerungssystem ferner einen Strömungssensor (2) umfasst, der eingerichtet ist, die Strömungsrate des durch die Leitung (10) strömenden Wärmemediums zu messen, und
   die Steuereinheit (5) aufweist
   eine Datensammeleinheit (51), die eingerichtet ist, Wärmemediuminformationen zu sammeln, die die durch den Strömungssensor (2) gemessene Strömungsrate (Fw1) des Wärmemediums, die vom Ausströmtemperatursensor (3) erfasste Ausströmtemperatur (THW1) und die durch den Einströmtemperatursensor (4) erfasste Einströmtemperatur (THW2) umfassen,
   eine Untergrenzenströmungsratenberechnungseinheit (52), die eingerichtet ist, eine Untergrenzenströmungsrate des Wärmemediums, das strömt, wenn eine minimale Wärmemenge von der Wärmequelleneinrichtung (200) zugeführt wird, zu berechnen, basierend auf den von der Datensammeleinheit (51) gesammelten Wärmemediuminformationen, und
   eine Strömungsratensteuerungsbefehlseinheit (53), die eingerichtet ist, die Wasserzirkulationspumpe (220) zu steuern basierend auf dem durch die Untergrenzenströmungsratenberechnungseinheit (52) berechneten Untergrenzenströmungsrate.

2. Erwärmungssteuerungssystem (1) nach Anspruch 1,
   wobei die Untergrenzenströmungsratenberechnungseinheit (52) eingerichtet ist, eine Zufuhrkapazität (Qhp) der Wärmequelleneinrichtung (200) zu berechnen basierend auf den Wärmemediuminformationen in einem Zustand, in dem die minimale Wärmemenge durch die Wärmequelleneinrichtung (200) zugeführt wird, und eine Zieldurchflussrate (Fw2) zu berechnen basierend auf der berechneten Zufuhrkapazität (Qhp) und einer eingestellten Zieltemperaturdifferenz ($\Delta T$) zwischen der Ausströmtemperatur und der Einströmtemperatur, und
   wobei die Strömungsratensteuerungsbefehlseinheit (53) eingerichtet ist, die berechnete Zielströmungsrate (Fw2) als die Untergrenzenströmungsrate (Fwl) einzustellen.

3. Wärmepumpenwarmwasserzufuhrerwärmungssystem, umfassend:

   eine Wärmequelleneinrichtung (200), die einen Wärmepumpenkreislauf aufweist und eingerichtet ist, ein Wärmemedium zu erwärmen;
   eine Wärmeabstrahlungseinrichtung (210), die mit der Wärmequelleneinrichtung (200) über eine Leitung (10), durch die das Wärmemedium strömt, verbunden ist;
   eine Wasserzirkulationspumpe (220), die eingerichtet ist, das Wärmemedium durch die Wärmequelleneinrichtung (200) und die Wärmeabstrahlungseinrichtung (210) zu zirkulieren; und
   das Erwärmungssteuerungssystem (1) nach Anspruch 1 oder 2.

**Revendications**

1. Système de commande de chauffage (1) configuré pour commander une pompe de circulation d'eau (220) configurée pour changer un débit d'un fluide caloporteur qui circule à travers un dispositif de source de chaleur (200) et un dispositif de rayonnement de chaleur (210) par l'intermédiaire d'un tuyau (10), le système de commande de chauffage (1) comprenant :

un capteur de température d'écoulement de sortie (3) configuré pour détecter une température d'écoulement de sortie du fluide caloporteur qui s'écoule hors du dispositif de source de chaleur (200) ;

un capteur de température d'écoulement d'entrée (4) configuré pour détecter une température d'écoulement d'entrée du fluide caloporteur qui s'écoule dans le dispositif de source de chaleur (200) ; et

un contrôleur (5) configuré pour commander la pompe de circulation d'eau (220), pour de ce fait commander le débit du fluide caloporteur,

**caractérisé en ce que**

le système de commande de chauffage comprend en outre un capteur d'écoulement (2) configuré pour mesurer le débit du fluide caloporteur s'écoulant à travers le tuyau (10), et

le contrôleur (5) comprend :

une unité de collecte de données (51) configurée pour collecter des informations de fluide caloporteur qui comprennent le débit (Fw1) du fluide caloporteur mesuré par le capteur d'écoulement (2), la température d'écoulement de sortie (THW1) détectée par le capteur de température d'écoulement de sortie (3), et la température d'écoulement d'entrée (THW2) détectée par le capteur de température d'écoulement d'entrée (4),

une unité de calcul de débit de limite inférieure (52) configurée pour calculer un débit de limite inférieure du fluide caloporteur qui s'écoule lorsqu'une quantité minimum de chaleur est fournie par le dispositif de source de chaleur (200), sur la base des informations de fluide caloporteur collectées par l'unité de collecte de données (51), et

une unité de commande de contrôle de débit (53) configurée pour commander la pompe de circulation d'eau (220) sur la base du débit de limite inférieure calculé par l'unité de calcul de débit de limite inférieure (52).

2. Système de commande de chauffage (1) selon la revendication 1,

dans lequel l'unité de calcul de débit de limite inférieure (52) est configurée pour calculer une capacité de fourniture (Qhp) du dispositif de source de chaleur (200) sur la base des informations de fluide caloporteur dans un état dans lequel la quantité minimum de chaleur est fournie par le dispositif de source de chaleur (200), et calculer un débit cible (Fw2) sur la base de la capacité de fourniture (Qhp) calculée et d'une différence de température cible ($\Delta T$) définie entre la température d'écoulement de sortie et la température d'écoulement d'entrée, et

dans lequel l'unité de commande de contrôle de débit (53) est configurée pour définir le débit cible (Fw2) calculé en tant que débit de limite inférieure (FwL).

3. Système de chauffage d'alimentation en eau chaude de pompe à chaleur, comprenant :

un dispositif de source de chaleur (200) comprenant un cycle de pompe à chaleur, et configuré pour chauffer un fluide caloporteur ;

un dispositif de rayonnement de chaleur (210) relié au dispositif de source de chaleur (200) par un tuyau (10) à travers lequel le fluide caloporteur s'écoule ;

une pompe de circulation d'eau (220) configurée pour faire circuler le fluide caloporteur à travers le dispositif de source de chaleur (200) et le dispositif de rayonnement de chaleur (210) ; et

le système de commande de chauffage (1) selon la revendication 1 ou 2.

FIG. 1

FIG. 2

FIG. 3

```
        ┌─────────────┐
        │    START    │
        └──────┬──────┘
               │
               ▼
     ┌──────────────────────┐
     │    COLLECT HEAT      │ ～ ST101
     │ MEDIUM INFORMATION   │
     └──────────┬───────────┘
               │
               ▼
     ┌──────────────────────┐
     │  CALCULATE SUPPLY    │ ～ ST102
     │    CAPACITY Qhp       │
     └──────────┬───────────┘
               │
               ▼
     ┌──────────────────────┐
     │  CALCULATE TARGET    │ ～ ST103
     │   FLOW RATE Fw2       │
     └──────────┬───────────┘
               │
               ▼
     ┌──────────────────────┐
     │  SET LOWER LIMIT     │ ～ ST104
     │   FLOW RATE FwL       │
     └──────────┬───────────┘
               │
               ▼
        ┌─────────────┐
        │     END     │
        └─────────────┘
```

**REFERENCES CITED IN THE DESCRIPTION**

**Patent documents cited in the description**

- WO 2009157630 A1
- WO 2016010006 A1